# EUROPEAN PATENT APPLICATION

(11) **EP 4 545 162 A1**
(43) Date of publication of application: **30.04.2025**
(21) Application number: 23831274.8
(22) Date of filing: 22.06.2023
(51) Int. Cl.: B01D 19/00, B01D 61/00, B01D 63/06, F04B 23/00

(54) **DEAERATOR**

(30) Priority: 27.06.2022 JP 2022102626
(71) Applicant: DIC Corporation, Tokyo 174-8520 (JP)
(72) Inventor: FUSE Takaaki, Ichihara-shi, Chiba 290-8585 (JP); KAWASHIMA Kazuyasu, Ichihara-shi, Chiba 290-8585 (JP); SATO Akira, Ichihara-shi, Chiba 290-8585 (JP); SUGANUMA Youhei, Ichihara-shi, Chiba 290-8585 (JP)
(74) Representative: TBK
(86) International application number: PCT/JP2023/023205
(87) International publication number: WO 2024/004830

(57) **Abstract**

A deaerator includes a deaerating module having a tube unit having gas permeability, sectioning between a fluid circulation space and a reduced-pressure space, a discharge device communicatively connected to vacuum piping communicatively connected to the reduced-pressure space of the deaerating module and configured to discharge a gas within the reduced-pressure space to the outside via the vacuum piping, a housing installed with the deaerating module and the discharge device, and a vibration isolating member interposed between the housing and the discharge device to support the discharge device with respect to the housing. The vibration isolating member has a resonance frequency of 45 Hz or lower.

## Description

### Technical Field

The present invention relates to a deaerator.

### Background Art

PTL 1 discloses a deaerator used in a liquid chromatography device and the like.

### Citation List

### Patent Literature

PTL 1: WO 2007/094242

### Summary of Invention

### Technical Problem

The deaerator described in PTL 1 includes a discharge device (a pump) depressurizing a reduced-pressure space within a deaerating module provided with a tube unit and is configured to deaerate a liquid circulating through the tube unit by activating the discharge device. However, when the discharge device is activated, vibrations are generated from the discharge device. Such vibrations may damage the tube unit constituting the deaerating module within the deaerator. Such vibrations may also disconnect the tube unit from the deaerating module. Such vibrations may also cause microbubbles in a fluid flowing in the deaerating module to affect the test.

Thus, an object of an aspect of the present invention is to provide a deaerator that can effectively suppress transmission of vibrations from the discharge device to the other components.

### Solution to Problem

The inventor of the present invention has intensively studied the above problem to obtain the following findings. That is, the discharge device of the deaerator discharges the gas in the reduced-pressure space to the outside by rotatingly driving a motor. As the number of revolutions of the motor becomes larger, the amount of the gas discharged to the outside from the reduced-pressure space becomes larger. On the other hand, since a load associated with the discharge of the gas acts on the motor, if the number of revolutions of the motor becomes too small, the rotation of the motor will stop, and the gas in the reduced-pressure space will not be able to be discharged to the outside. Thus, in the discharge device, the motor is required to be rotated at a number of revolutions not smaller than a smallest number of rotations at which the rotation of the motor does not stop. According to verification by the inventor of the present invention, the lowest frequency, which is the frequency of vibrations generated from the discharge device when the motor is rotated at the smallest number of rotations, is 50 to 60 Hz. A vibration isolating member has the property of damping vibrations of frequencies higher than its resonance frequency. Given these circumstances, the inventor of the present invention has found that the use of a vibration isolating member having a resonance frequency of 50 Hz or lower can suppress transmission of vibrations from the discharge device to the other components. An aspect of the present invention has been made based on the above findings.

[1] A deaerator according to an aspect of the present invention includes a deaerating module having a tube unit having gas permeability, sectioning between a fluid circulation space and a reduced-pressure space;
   a discharge device communicatively connected to vacuum piping communicatively connected to the reduced-pressure space of the deaerating module and configured to discharge a gas in the reduced-pressure space to the outside via the vacuum piping;
   a housing installed with the deaerating module and the discharge device; and
   a vibration isolating member interposed between the housing and the discharge device to support the discharge device with respect to the housing,
   the vibration isolating member having a resonance frequency of 45 Hz or lower.
   In this deaerator, the discharge device is supported with respect to the housing via the vibration isolating member, and the vibration isolating member has a resonance frequency of 45 Hz or lower. Thus, the vibration isolating member can effectively suppress transmission of vibrations generated from the discharge device when the discharge device is activated to the housing. This can effectively suppress transmission of vibrations from the discharge device to the other components and can thus suppress, for example, breakage of the tube unit, disconnection of the tube unit, the occurrence of noise, the growth of microbubble in a test fluid, and the like.
[2] In the deaerator according to [1], the housing may have a bottom plate defining a bottom plate of the deaerator, and the discharge device may be supported with respect to the bottom plate via the vibration isolating member. In this deaerator, the discharge device is supported with respect to the bottom plate via the vibration isolating member, which can suppress transmission of vibrations from the discharge device to the housing and also stably support the discharge device.
[3] In the deaerator according to [2], the housing may have a front plate erected on the bottom plate, and the deaerating module may be fixed to the front plate. In this deaerator, the deaerating module is fixed to the front plate erected on the bottom plate, not to the bottom plate with respect to which the discharge device is supported, which can make the path from the discharge device to the deaerating module longer and more complex. This can more suppress transmission of vibrations from the discharge device to the deaerating module.
[4] In the deaerator according to [2] or [3], at least part of the vibration isolating member may be arranged between the bottom plate and the discharge device, and the discharge device may be arranged so as to have a predetermined height from the bottom plate. In this deaerator, at least part of the vibration isolating member is arranged between the bottom plate and the discharge device, and the discharge device is arranged so as to have a predetermined height from the bottom plate, which can more suppress transmission of vibrations from the discharge device to the housing and, in addition, can prevent erosion of the discharge device by a fluid to be deaerated in the deaerator even if the fluid leaks from the deaerating module. Even if such leakage occurs, liquid waste disposal can be easily performed.
[5] In the deaerator according to any one of [2] to [4], the discharge device may have a pump and a fixing plate to which the pump is fixed, and the vibration isolating member may be interposed between the bottom plate and the fixing plate. In this deaerator, the vibration isolating member is interposed between the bottom plate of the housing and the fixing plate of the discharge device, which allows a higher degree of freedom of arranging the vibration isolating member and allows the vibration isolating member to be arranged over a wider area than when the vibration isolating member is directly mounted on the pump. This can more enhance the vibration isolation effect of the vibration isolating member.
[6] In the deaerator according to any one of [1] to [5], at least part of the vacuum piping may be a resin composition containing polyolefin and a styrene thermoplastic elastomer. In this deaerator, at least part of the vacuum piping is a resin composition containing a polyolefin and a styrene thermoplastic elastomer, which can provide excellent solvent resistance, chemical resistance, and durability. In addition, gas permeability can be reduced, and disconnection of the vacuum piping can be suppressed. Such durability and disconnection suppression can more be improved by operating the lowest frequency of the motor of the deaerator at 50 to 60 Hz in particular. Advantageous Effects of Invention

An aspect of the present invention can effectively suppress transmission of vibrations from the discharge device to the other components.

### Brief Description of Drawings

FIG. 1 is a schematic plan view of a deaerator according to an embodiment of the present invention.
FIG. 2 is a schematic side view of the deaerator illustrated in FIG. 1.
FIG. 3 is a schematic cross-sectional view of an example of a deaerating module installed in the deaerator illustrated in FIG. 1.
FIG. 4 is an enlarged cross-sectional view of a section around a connector portion of the deaerating module illustrated in FIG. 3.
FIG. 5 is an enlarged cross-sectional view of a section around a vibration isolating member of the deaerator illustrated in FIG. 1.
FIG. 6 is a schematic side view of a deaerator as another example.
FIG. 7 is an enlarged cross-sectional view of a section around a vibration isolating member of the deaerator illustrated in FIG. 6.
FIG. 8 is a schematic side view of a deaerator as another example.
FIG. 9 is an enlarged cross-sectional view of a section around a vibration isolating member of the deaerator illustrated in FIG. 8.
FIG. 10 is a schematic side view of a deaerator as another example.

### Description of Embodiments

A deaerator of an embodiment will be described in detail below with reference to the drawings. In all of the drawings, the same or corresponding parts are denoted by the same reference signs and an overlapping description will be omitted.

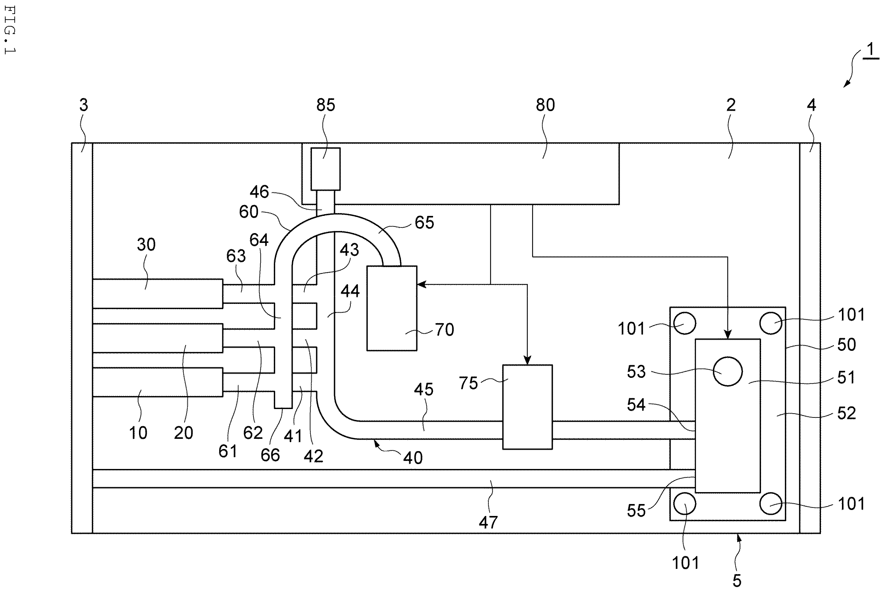

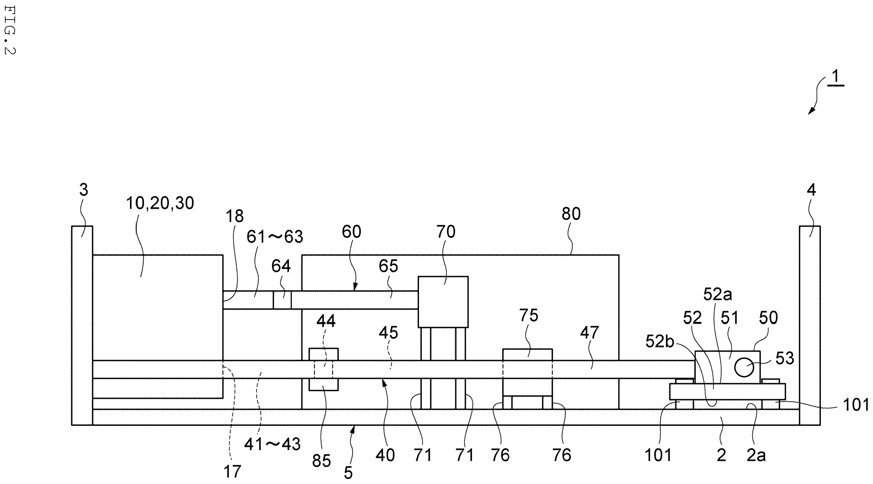

FIG. 1 is a schematic plan view of a deaerator according to an embodiment. FIG. 2 is a schematic side view of the deaerator illustrated in FIG. 1. As illustrated in FIG. 1 and FIG. 2, a deaerator 1 includes a housing 5 having a bottom plate 2, a front plate 3, and a rear plate 4, deaerating modules 10, 20, and 30, vacuum piping 40, a discharge device 50, atmospheric release piping 60, an atmospheric release valve 70, a regulating valve 75, and a control unit 80. The bottom plate 2 of the housing 5 defines the bottom of the deaerator 1, the front plate 3 of the housing 5 defines the front of the deaerator 1, and the rear plate 4 of the housing 5 defines the rear of the deaerator 1. The deaerator 1 is, for example, a deaerator for liquid chromatography and performs a deaerating process on a fluid to be tested in liquid chromatography. The deaerator 1 may be used for gas chromatography, biochemical analyzers, inkjet filling devices, and the like, as a matter of course.

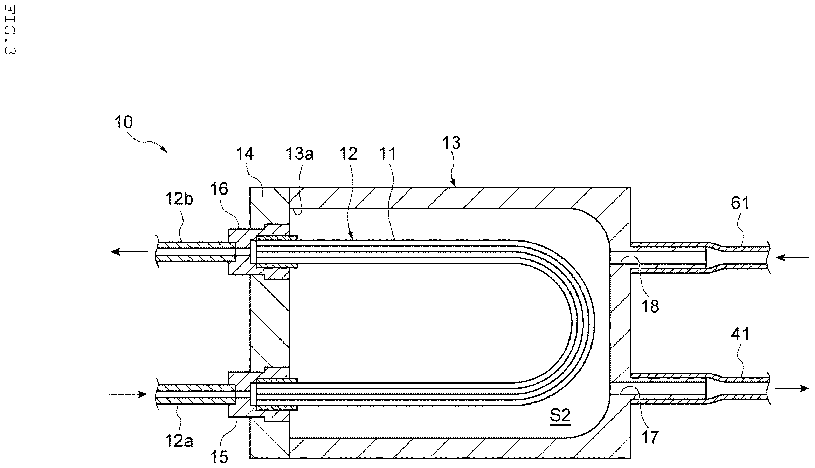

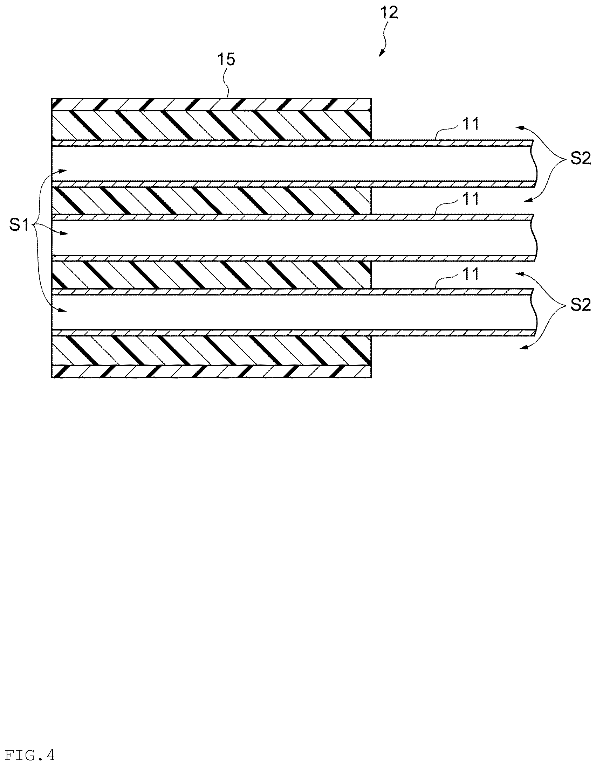

The deaerating modules 10, 20, and 30 have a configuration, for example, illustrated in FIG. 3. FIG. 3 is a schematic cross-sectional view of an example of the deaerating module installed in the deaerator illustrated in FIG. 1. FIG. 4 is an enlarged cross-sectional view of a section around a connector portion of the deaerating module illustrated in FIG. 3. FIG. 3 illustrates a configuration of the deaerating module 10 as an example, and the other deaerating modules 20 and 30 have a similar configuration. As illustrated in FIG. 3 and FIG. 4, the deaerating module 10 has a tube unit 12 with a plurality of tubes 11 bundled at both ends, each tube 11 defining a fluid circulation space S1 in the inside, a housing 13 that accommodates the tube unit 12, a lid 14 that hermetically seals an opening 13a of the housing 13, a connector portion 15 and a connector portion 16 that connect and fix the tube unit 12 penetrating through the lid 14, and a discharge port 17 and a release port 18 communicatively connected to a reduced-pressure space S2.

In the deaerating module 10, the tube unit 12 which is gas permeable membranes having gas permeability divides the inside of the housing 13 into the fluid circulation space S1 which is an interior space of each of the tubes 11 of the tube unit 12 and the reduced-pressure space S2 which is a space outside the tube unit 12. The fluid circulation space S1 is a region where a liquid is supplied, and the liquid introduced from an inlet port 12a of the tube unit 12 is supplied to a discharge port 12b. The reduced-pressure space S2 is a region where the internal gas is sucked. In the deaerating module 10, a liquid is supplied to the fluid circulation space S1 which is the interior space of each of the tubes 11, and a gas is sucked from the reduced-pressure space S2 outside the tubes 11, whereby the liquid supplied to the tube unit 12 is deaerated.

Each of the tubes 11 that constitute the tube unit 12 is a tubular membrane (gas permeable membrane) that allows a gas to pass through but does not allow a liquid to pass through (see FIG. 4). The material, membrane shape, membrane form, and the like of the tube 11 are not limited. Examples of the material of the tube 11 include fluororesins such as polytetrafluoroethylene (PTFE), tetrafluoroethylene-perfluoroalkyl vinyl ether copolymer (PFA), tetrafluoroethylene-hexafluoropropylene copolymer (FEP), tetrafluoroethylene-ethylene copolymer (ethylene copolymer) (ETFE), polychlorotrifluoroethylene (PCTFE), amorphous fluoropolymer (AF), and polyvinylidene fluoride (PVDF), polypropylene (PP), polymethylpentene (PMP), silicone, polyimide, and polyamide. An example of the amorphous fluoropolymer may be Teflon (registered trademark) AF.

In the deaerator 1, three deaerating modules 10, 20, and 30 in such a manner are arranged, but one deaerating module may be arranged, two deaerating modules may be arranged, or four or more deaerating modules may be arranged.

Returning to FIG. 1 and FIG. 2, the description will be further given. As illustrated in FIG. 1 and FIG. 2, the vacuum piping 40 is a member communicatively connected to the respective reduced-pressure spaces S2 of the deaerating modules 10, 20, and 30 to connect the reduced-pressure spaces S2 to the discharge device 50. The vacuum piping 40 has discharge piping sections 41, 42, and 43 continuous to the respective discharge ports 17 of the deaerating modules 10, 20, and 30, a discharge assembly section 44 for assembling the discharge piping sections 41, 42, and 43, piping 45 connecting the discharge assembly section 44 to the discharge device 50, a detection piping section 46 communicatively connecting the discharge assembly section 44 to a detector 85, and discharge piping 47 continuous to the discharge device 50. As will be described later, the detector 85 is a barometric pressure sensor that detects the degree of depressurization in the respective reduced-pressure spaces S2 of the deaerating modules 10, 20, and 30 and is provided in the control unit 80. The end of the discharge piping 47 opposite the discharge device 50 is mounted on the front plate 3 and opens to the outside of the deaerator 1 in front of the front plate 3.

At least some of the discharge piping sections 41, 42, and 43, the discharge assembly section 44, the piping 45, the detection piping section 46, and the discharge piping 47 that constitute the vacuum piping 40 are formed of, for example, resin tubes. All or almost all (e.g., excluding a joint portion) of the constituent members of the vacuum piping 40 may be formed of resin tubes. In other words, a plurality of tubes may be coupled using joint members or the like to constitute the vacuum piping 40. Such a tube is resistant to a solvent used in liquid chromatography and is formed of piping, for example, having a rubber hardness of preferably in the range of 70±30 degrees and an oxygen permeability of 6000 cc(STP)cm/cm²/sec/cmHg×10⁻¹⁰ or less. The rubber hardness is preferably in the range of 70±30 degrees. In order to achieve both of appropriate flexibility to prevent loosening or disconnection at a joint portion and appropriate durability to suppress deformation, crushing, or blockage of the tubes, the lower limit is more preferably 50 degrees or more, even more preferably 55 degrees or more, particularly preferably 60 degrees or more, and the upper limit is more preferably 95 degrees or less, even more preferably 80 degrees or less, and particularly preferably 75 degrees or less. It is noted that the rubber hardness represents Shore A and can be measured, for example, with a durometer (type A) in accordance with JIS K7312 (1996). In terms of excellent durability, the oxygen permeability is preferably 6000 cc (STP)cm/cm²/sec/cmHg×10⁻¹⁰ or less, more preferably 3000 cc(STP)cm/cm²/sec/cmHg×10⁻¹⁰ or less, even more preferably 1000 cc(STP)cm/cm²/sec/cmHg×10⁻¹⁰ or less, particularly preferably 500 cc(STP)cm/cm²/sec/cmHg×10⁻¹⁰ or less, and preferably 0.1 cc(STP)cm/cm²/sec/cmHg×10⁻¹⁰ or more, more preferably 10 cc(STP)cm/cm²/sec/cmHg×10⁻¹⁰ or more. It is noted that the oxygen permeability represents the oxygen transmission rate and can be measured, for example, in accordance with the ASTM D 1434 Standard.

The material of the tubes that constitute the vacuum piping 40 is not limited as long as it has the properties described above. Examples include vinyl chloride, silicone rubber; polyamides (nylon) such as nylon 6, nylon 66, nylon 11, and nylon 12; polyurethanes; polyolefins such as polyethylene such as low-density polyethylene and linear low-density polyethylene, and polypropylene; fluororesins such as FEP, PFA, ETFE, and PTFE; and thermoplastic elastomers such as polyester thermoplastic elastomers, styrene thermoplastic elastomers, and olefin thermoplastic elastomers. One or two or more kinds of these can be used. Among the materials described above, a resin composition containing polyolefin and a thermoplastic elastomer is more preferred as the material of the tubes that constitute the vacuum piping 40, and a resin composition containing polyolefin and a styrene thermoplastic elastomer is even more preferred.

The vacuum piping 40 formed of the resin composition containing polyolefin and a thermoplastic elastomer described above has not only excellent solvent resistance but also low gas permeability. The vacuum piping 40 formed of the resin composition containing polyolefin and a thermoplastic elastomer described above has appropriate flexibility and has excellent durability, because loosening or disconnection at a joint portion of the discharge assembly section 44 during deaerating operation is prevented and deformation, crushing, or blockage of the tubes is suppressed. Further, the deaerator 1 according to the present embodiment includes a plurality of deaerating modules and has many joint configurations such as joint portions between the vacuum piping 40 and the deaerating modules 10, 20, and 30 and joint portions of the discharge assembly section 44 with other parts, and the configuration having the tubes with such flexibility and durability can also improve the long-term reliability of the deaerator.

The styrene thermoplastic elastomer used for the vacuum piping 40 is a copolymer having at least one styrene block (hard segment) and at least one elastomer block. Vinyl-polydiene, polyisoprene, polybutadiene, polyethylene, polychloroprene, poly(2,3-dimethylbutadiene), or the like is preferably used as the elastomer block. The elastomer block may be hydrogenated. It is preferable that the elastomer block is hydrogenated, because if so, the solvent resistance and the chemical-resistant performance tend to be higher. Specific examples of the styrene thermoplastic elastomer include styrene-vinylisoprene-styrene triblock copolymer (SIS), styrene-isobutylene diblock copolymer (SIB), styrenebutadiene-styrene triblock copolymer (SBS), styrene-ethylene/butene-styrene triblock copolymer (SEBS), styrene-ethylene/propylene-styrene triblock copolymer (SEPS), styrene-ethylene/ethylene/propylene-styrene triblock copolymer (SEEPS), and styrene-butadiene/butylene-styrene triblock copolymer (SBBS). The styrene thermoplastic elastomers may be used alone or in combination of two or more. Among these, styrene-vinyl isoprene-styrene triblock copolymer is preferred because of its superior solvent resistance and chemical-resistant performance. Suitable examples of such styrene-vinylisoprene-styrene triblock copolymer include "FG1901 G Polymer" and "FG1924 G Polymer" available from KRATON CORPORATION and HYBRAR 5127 available from Kuraray Co., Ltd. The hydrogenated vinylisoprene block, HYBRAR 7311, available from Kuraray Co., Ltd. is also suitable.

The lower limit of the range of the amount of styrene block (styrene content) in the styrene thermoplastic elastomer is preferably 1% by mass, more preferably 5% by mass, and even more preferably 10% by mass of the total of styrene block and elastomer block. In this range, higher solvent resistance and chemical-resistant performance tend to be achieved. On the other hand, the upper limit is preferably 30% by mass and more preferably 20% by mass of the total of styrene block and elastomer block. In this range, solvent resistance and chemical-resistant performance tend to be more excellent.

The lower limit of the range of the amount of styrene thermoplastic elastomer in the resin composition containing polyolefin and a styrene thermoplastic elastomer is preferably 3% by mass, more preferably 5% by mass, and even more preferably 10% by mass of the total of polyolefin and styrene thermoplastic elastomer. In this range, higher solvent resistance and chemical-resistant performance tend to be achieved. On the other hand, the upper limit is preferably 30% by mass, more preferably 25% by mass, and even more preferably 20% by mass of the total of polyolefin and styrene thermoplastic elastomer. In this range, high solvent resistance and chemical-resistant performance tend to be achieved.

In the discharge assembly section 44, the joint portion that couples the tubes to each other may be formed of hard plastic (polypropylene) or the like.

The discharge device 50 is communicatively connected to the reduced-pressure spaces S2 of the deaerating modules 10, 20, and 30 through the vacuum piping 40 and discharges the gas in the reduced-pressure spaces S2 to the outside based on control instructions from the control unit 80. The discharge device 50 is arranged above the bottom plate 2. The discharge device 50 includes, for example, a pump 51 and a fixing plate 52 to which the pump 51 is fixed. The pump 51 is fixed to an upper face 52a (the face opposite the bottom plate 2) of the fixing plate 52. Thus, a lower face 52b (the face closer to the bottom plate 2) of the fixing plate 52 is the lowest face (the face closest to the bottom plate 2) of the discharge device 50. The pump 51 includes a motor 53 for discharging the gas in the reduced-pressure spaces S2 to the outside, an intake port 54 to which the piping 45 is connected to suck the gas in the reduced-pressure spaces S2, and an exhaust port 55 to which the discharge piping 47 is connected to discharge the sucked gas to the outside of the deaerator 1, and the motor 53 is rotationally driven based on control instructions from the control unit 80 to discharge the gas in the reduced-pressure spaces S2 to the outside. As the pump 51, for example, a diaphragm-type dry vacuum pump is used. The diaphragm-type dry vacuum pump is a vacuum pump that moves a separation membrane (a diaphragm) up and down by rotationally driving a motor and moves a gas from an intake port to an exhaust port by this up and down movement of the separation membrane. As the fixing plate 52, for example, a rectangular metal plate or the like is used.

In the discharge device 50, as the number of revolutions of the motor 53 becomes larger, the amount of the gas discharged from the reduced-pressure spaces S2 to the outside becomes larger. On the other hand, since a load associated with the discharge of the gas acts on the motor 53, if the number of revolutions of the motor 53 becomes too small, the rotation of the motor 53 will stop, and the gas in the reduced-pressure space S2 will not be able to be discharged to the outside. Thus, the motor 53 has a smallest number of revolutions, which is the smallest number of revolutions at which the gas in the reduced-pressure space S2 can be discharged to the outside without stopping its rotation. In other words, when the motor 53 is rotationally driven at a number of revolutions not smaller than the smallest number of revolutions, the gas in the reduced-pressure space S2 can be discharged to the outside without stopping the rotation of the motor 53. In the deaerator 1, the lowest frequency, which is the frequency of vibrations generated from the discharge device 50 when the motor 53 rotates at the smallest number of revolutions is 50 to 60 Hz. Note that when the motor 53 rotates at a number of revolutions larger than the smallest number of revolutions, the frequency of vibrations generated from the discharge device 50 is a frequency higher than the lowest frequency.

The discharge device 50 is supported with respect to the bottom plate 2 of the housing 5 via four vibration isolating members 101. The four vibration isolating members 101 have the same configuration and will be described collectively as the vibration isolating member 101 except when they are specially described in a separate manner. The vibration isolating member 101 is a member for damping vibrations to suppress transmission of the vibrations. The vibration isolating member 101 is preferably a vibration-damping steel plate structure. The vibration-damping steel plate structure is a composite constrained vibration-damping structure used with, for example, a viscoelastic substance (preferably rubber, gel, or an elastomer) with a thickness of 0.1 mm to 1 cm held between two members such as plate members. The vibration isolating member 101 is interposed between the bottom plate 2 and the discharge device 50 (the fixing plate 52) to support the discharge device 50 with respect to the bottom plate 2. The four vibration isolating members 101 are arranged at the four corners of the fixing plate 52 in a plan view and support the discharge device 50 (the fixing plate 52) at the four corners of the fixing plate 52. The discharge device 50 is arranged at a predetermined height from a top face 2a (the side closer to the discharge device 50) of the bottom plate 2 by the vibration isolating member 101. To effectively suppress transmission of vibrations from the discharge device 50 to the housing 5, the resonance frequency of the vibration isolating member 101 is 45 Hz or lower. The resonance frequency, also called the resonance number of vibrations or the resonance point, refers to the frequency of a peak value of a graph in a vibration transmission characteristic graph expressed with the horizontal axis as frequency (Hz) and with the vertical axis as response magnification (dB). The vibration isolating member 101 has the property of damping vibrations with frequencies higher than its resonance frequency, and thus when the resonance frequency of the vibration isolating member 101 is 45 Hz or lower, vibrations in a frequency range not lower than the resonance frequency of the vibration isolating member 101 can be damped while avoiding resonance with the discharge device 50, which has a lowest frequency of 50 to 60 Hz.

In this case, as the frequency of the vibration to be damped becomes higher with respect to the resonance frequency of the vibration isolating member 101, resonance with the discharge device 50 can more be suppressed while producing the vibration isolation effect (the vibration damping effect) of the vibration isolating member 101, and thus the resonance frequency of the vibration isolating member 101 is 45 Hz or lower, and preferably 40 Hz or lower. When the resonance frequency of the vibration isolating member 101 is a frequency 30% or more lower than the vibration to be damped, resonance with the discharge device 50 can more be suppressed while producing the vibration isolation effect of the vibration isolating member 101, and thus the resonance frequency of the vibration isolating member 101 is more preferably 35 Hz or lower. On the other hand, from the viewpoint of ease of production of the vibration isolating member 101, the resonance frequency of the vibration isolating member 101 is, for example, preferably 20 Hz or higher, more preferably 23 Hz or higher, and even more preferably 30 Hz or higher. From these viewpoints, the resonance frequency of the vibration isolating member 101 is, for example, preferably 20 Hz or higher and 45 Hz or lower, more preferably 23 Hz or higher and 40 Hz or lower, and even more preferably 23 Hz or higher and 35 Hz or lower.

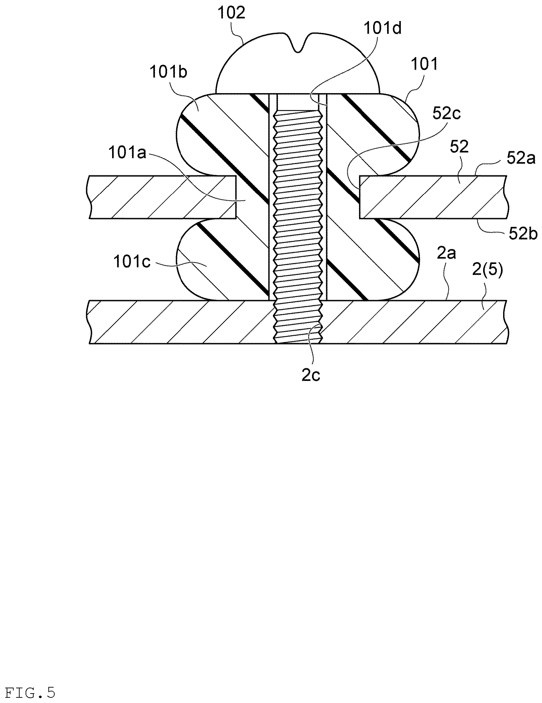

The vibration isolating member 101 has a configuration, for example, illustrated in FIG. 5. FIG. 5 is an enlarged cross-sectional view of a section around a vibration isolating member of the deaerator illustrated in FIG. 1. As illustrated in FIG. 5, the vibration isolating member 101 is interposed between the bottom plate 2 and the fixing plate 52 to support the fixing plate 52 with respect to the bottom plate 2. The vibration isolating member 101 has a neck portion 101a inserted into a through hole 52c of the fixing plate 52, an upper diameter-expanded portion 101b extending from the neck portion 101a toward the upper face 52a of the fixing plate 52 to be expanded, a lower diameter-expanded portion 101c extending from the neck portion 101a toward the lower face 52b of the fixing plate 52 to be expanded, and a through hole 101d passing through the neck portion 101a, the upper diameter-expanded portion 101b, and the lower diameter-expanded portion 101c. The upper diameter-expanded portion 101b and the lower diameter-expanded portion 101c are larger in diameter than the hole diameter of the through hole 52c of the fixing plate 52 so that they do not pass through the through hole 52c of the fixing plate 52. A screw 102 is inserted into the through hole 101d of the vibration isolating member 101 from the side closer to the upper face 52a of the fixing plate 52 and is screwed into a screw hole 2c of the bottom plate 2. With this, the upper diameter-expanded portion 101b and the lower diameter-expanded portion 101c put the fixing plate 52 therebetween from the side closer to the upper face 52a and the side closer to the lower face 52b, thus causing the lower diameter-expanded portion 101c to be pressed against the bottom plate 2 and causing the discharge device 50 to be supported with respect to the bottom plate 2 via the vibration isolating member 101. Note that the lower diameter-expanded portion 101c serves as a spacer between the fixing plate 52 and the bottom plate 2, thus arranging the fixing plate 52 so as to have a predetermined height from the bottom plate 2.

Returning to FIG. 1 and FIG. 2, the description will be further given. As illustrated in FIG. 1 and FIG. 2, the atmospheric release piping 60 is a member communicatively connected to the respective reduced-pressure spaces S2 of the deaerating modules 10, 20, and 30 to connect the reduced-pressure spaces S2 to the atmospheric release valve 70. The atmospheric release piping 60 has release piping sections 61, 62, and 63 continuous to the respective release ports 18 of the deaerating modules 10, 20, and 30, a release assembly section 64 for assembling the release piping sections 61, 62, and 63, and piping 65 connecting the release assembly section 64 to the atmospheric release valve 70. An end 66 opposite to the piping 65 of the release assembly section 64 of the atmospheric release piping 60 is closed. The atmospheric release piping 60 is formed of the same material as the vacuum piping 40, for example, resin tubes. More specifically, at least some of the release piping sections 61, 62, and 63, the release assembly section 64, and the piping 65 that constitute the atmospheric release piping 60 are formed of, for example, resin tubes as described above. All or almost all (e.g., excluding a joint portion) of the constituent members of the atmospheric release piping 60 may be formed of resin tubes. In other words, a plurality of resin tubes may be coupled using joint members or the like to constitute the atmospheric release piping 60. Such a resin tube is resistant to a solvent used in liquid chromatography and is formed of piping having a rubber hardness in the range of 70±30 degrees and an oxygen permeability of 6000 cc(STP)cm/cm²/sec/cmHg×10⁻¹⁰ or less. The joint portion of the release assembly section 64 may be formed of hard plastic (e.g., polypropylene) or the like, in the same manner as the joint portion of the discharge assembly section 44.

The atmospheric release valve 70 is a solenoid valve communicatively connected to one end of the atmospheric release piping 60 and capable of introducing the atmosphere into the respective reduced-pressure spaces S2 of the deaerating modules 10, 20, and 30 at once through the atmospheric release piping 60, based on control instructions from the control unit 80. When a deaerating process in the deaerating modules 10, 20, and 30 is finished, for example, the atmospheric release valve 70 opens the solenoid valve from the closed state (CLOSE) to the open state (OPEN) within five seconds, based on control instructions from the control unit 80, and opens the reduced-pressure spaces S2 (for example, 1 L containers) to the atmosphere within one minute.

The regulating valve 75 is a solenoid valve arranged between the deaerating modules 10, 20, and 30 and the discharge device 50 to regulate the degree of depressurization in the reduced-pressure spaces S2. The regulating valve 75 opens the valve when a depressurization process in the reduced-pressure spaces S2 by the discharge device 50 is being performed, and closes the valve based on control instructions from the control unit 80 when the degree of depressurization in the reduced-pressure spaces S2 falls within a predetermined range. In this case, the discharge device 50 can stop its discharge operation. On the other hand, when the degree of depressurization in the reduced-pressure spaces S2 subsequently falls outside the predetermined range, the valve is opened based on control instructions from the control unit 80. Both the atmospheric release valve 70 and the regulating valve 75 are raised to a predetermined height from the bottom plate 2 of the housing 5 by a plurality of legs 71 and a plurality of legs 76.

The control unit 80 controls the activation and deactivation of the pump 51 of the discharge device 50. The control unit 80 has the detector 85 to detect the degree of depressurization in the reduced-pressure spaces S2 and controls the operation of the discharge device 50 and the regulating valve 75 based on the detected degree of depressurization. In this control, the atmosphere is discharged by the discharge device 50 so that the degree of depressurization detected by the detector 85 attains a predetermined value, and when the degree of depressurization in the reduced-pressure spaces S2 falls within the predetermined range, the regulating valve 75 is closed and the operation of the discharge device 50 is stopped. When the degree of depressurization detected by the detector 85 falls outside the predetermined range after the regulating valve 75 is closed, the control unit 80 brings the discharge device 50 into operation again to perform a discharge process.

On the other hand, when the deaerating process is finished by the deaerating modules 10, 20, and 30, the control unit 80 controls the operation of the discharge device 50 and the atmospheric release valve 70 based on a stop instruction, for example, from the outside. In this control, after the deaerating process is finished, the atmospheric release valve 70 is opened to open the reduced-pressure spaces S2 to the atmosphere at once. After the deaerating process is finished, control may be performed such that the atmospheric release valve 70 is opened to open the reduced-pressure spaces S2 to the atmosphere at once while the gas discharge operation by the discharge device 50 continues for a predetermined time (e.g., a few seconds).

In the deaerator 1 according to the present embodiment, the discharge device 50 is supported with respect to the housing 5 via the vibration isolating member 101, and the resonance frequency of the vibration isolating member 101 is 45 Hz or lower. Thus, the vibration isolating member 101 can effectively suppress transmission of vibrations generated from the discharge device 50 to the housing 5 when the discharge device 50 is activated. This can effectively suppress transmission of vibrations from the discharge device 50 to the other components and can thus suppress, for example, breakage of the tube unit 12, disconnection of the tube unit 12, the occurrence of noise, the growth of microbubble in a test fluid, and the like.

In this deaerator 1, the discharge device 50 is supported with respect to the bottom plate 2 via the vibration isolating member 101, which can suppress transmission of vibrations from the discharge device 50 to the housing 5 and also support the discharge device 50 stably.

In this deaerator 1, the deaerating modules 10, 20, and 30 are fixed to the front plate 3 erected on the bottom plate 2, not to the bottom plate 2 with respect to which the discharge device 50 is supported, which can make the path from the discharge device 50 to the deaerating modules 10, 20, and 30 longer and more complex. This can more suppress transmission of vibration from the discharge device 50 to the deaerating modules 10, 20, and 30.

In this deaerator 1, the lower diameter-expanded portion 101c of the vibration isolating member 101 is arranged between the bottom plate 2 and the fixing plate 52 of the discharge device 50, and the discharge device 50 is arranged so as to have a predetermined height from the bottom plate 2, which can more suppress transmission of vibrations from the discharge device 50 to the housing 5 and, in addition, can prevent erosion of the discharge device 50 by a fluid to be deaerated in the deaerator 1 even if the fluid leaks from the deaerating modules 10, 20, and 30. Even if such leakage occurs, liquid waste disposal can be easily performed.

In this deaerator 1, the vibration isolating member 101 is interposed between the bottom plate 2 of the housing 5 and the fixing plate 52 of the discharge device 50, which allows a higher degree of freedom of arranging the vibration isolating member 101 and allows the vibration isolating member 101 to be arranged over a wider area than when the vibration isolating member 101 is directly mounted on the pump 51. This can more enhance the vibration isolation effect of the vibration isolating member 101.

In this deaerator 1, at least part of the vacuum piping 40 is a resin composition containing polyolefin and a styrene thermoplastic elastomer, which can provide excellent solvent resistance, chemical resistance, and durability. In addition, gas permeability can be reduced and disconnection of the vacuum piping 40 can be suppressed. Such durability and disconnection suppression can more be improved by operating the lowest frequency of the motor 53 of the deaerator 1 at 50 to 60 Hz in particular.

Although an embodiment of the present invention has been described above, the present invention is not limited to the foregoing embodiment and can be changed or modified as appropriate without departing from the spirit of the present invention.

For example, the bottom plate of the housing defines the bottom of the deaerator, in which one or a plurality of legs or rollers may be mounted on the bottom plate, and the deaerator may be installed on an installation face by the legs or rollers.

For example, the number of the vibration isolating members is not limited to four, which may be any number of one or more.

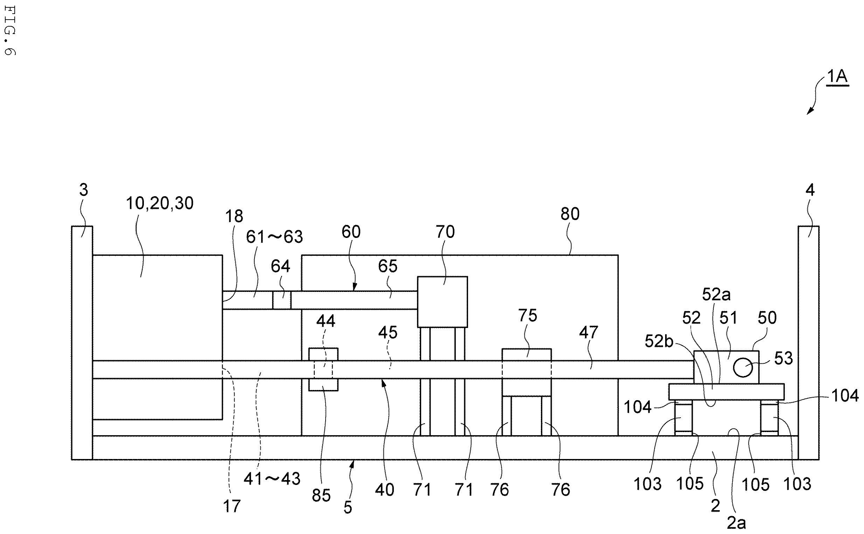

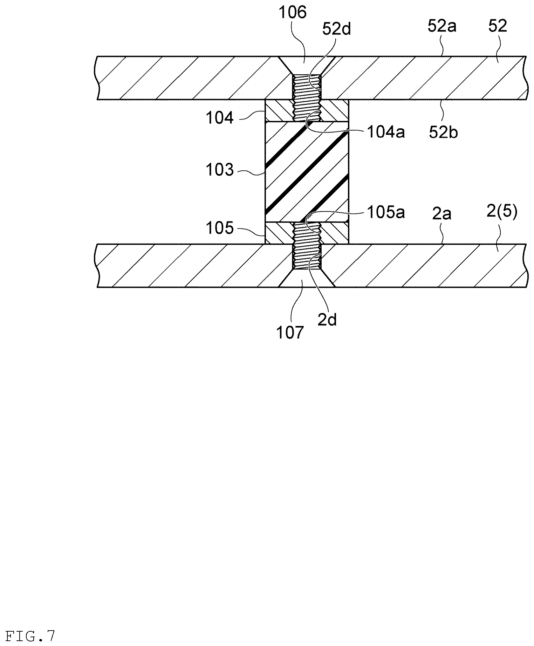

For example, the vibration isolating member is not necessarily directly mounted on the housing and the discharge device but may be mounted on the housing and the discharge device via other members. FIG. 6 is a schematic side view of a deaerator as another example. FIG. 7 is an enlarged cross-sectional view of a section around a vibration isolating member of the deaerator illustrated in FIG. 6. This deaerator 1A illustrated in FIG. 6 and FIG. 7 is basically the same as the deaerator 1 of the above embodiment, but the shape of the vibration isolating member and the mounting structure of the vibration isolating member to the housing and the discharge device differ from those of the deaerator 1 of the above embodiment. As illustrated in FIG. 6 and FIG. 7, this vibration isolating member 103 of the deaerator 1A is formed in a columnar shape such as a cylinder or a square column. An upper plate 104 formed with a screw groove 104a is connected to an upper end, which is a tip on one side, of the vibration isolating member 103, and a lower plate 105 formed with a screw groove 105a is connected to a lower end, which is a tip on the other side, of the vibration isolating member 103. A screw 106 inserted into a through hole 52d of the fixing plate 52 is screwed into the screw groove 104a of the upper plate 104, thereby fixing the upper plate 104 to the fixing plate 52, and a screw 107 inserted into a through hole 2d of the bottom plate 2 is screwed into the screw groove 105a of the lower plate 105, thereby fixing the lower plate 105 to the bottom plate 2. Even with this configuration, the vibration isolating member 103 is interposed between the bottom plate 2 of the housing 5 and the fixing plate 52 of the discharge device 50 to support the discharge device 50 with respect to the bottom plate 2 of the housing 5. Thus, setting the resonance frequency of the vibration isolating member 103 to 45 Hz or lower can effectively suppress transmission of vibrations from the discharge device 50 to the other components. This can suppress, for example, breakage of the tube unit 12, disconnection of the tube unit 12, the occurrence of noise, the growth of microbubble in a test fluid, and the like.

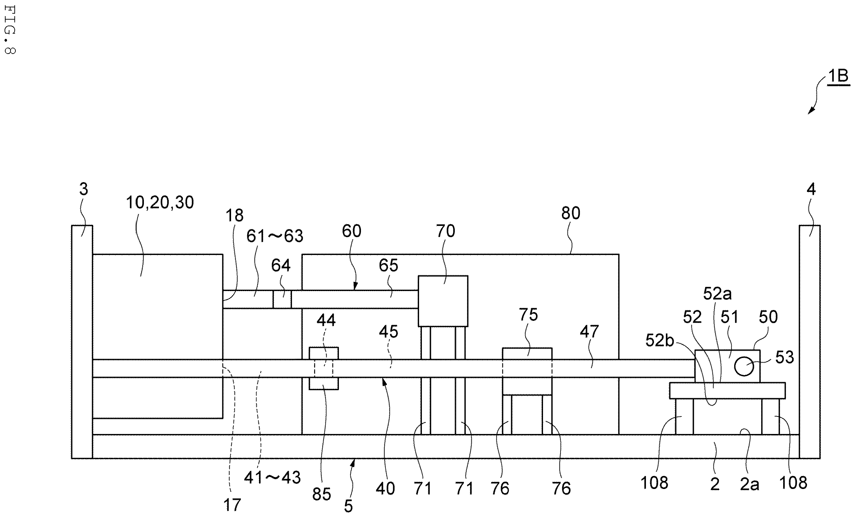

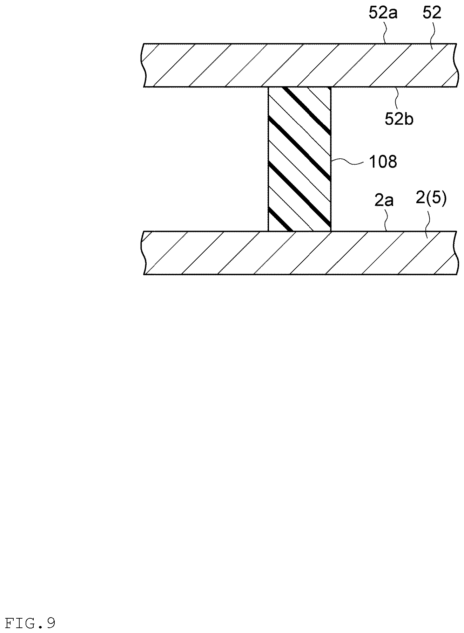

For example, the vibration isolating member is not necessarily mounted on the housing and the discharge device by a fastening member such as a screw but may be mounted on the housing and the discharge device by other means such as adhesion. FIG. 8 is a schematic side view of a deaerator as another example. FIG. 9 is an enlarged cross-sectional view of a section around a vibration isolating member of the deaerator illustrated in FIG. 8. This deaerator 1B illustrated in FIG. 8 and FIG. 9 is basically the same as the deaerator 1 of the above embodiment, but the shape of the vibration isolating member and the mounting structure of the vibration isolating member to the housing and the discharge device differ from those of the deaerator 1 of the above embodiment. As illustrated in FIG. 8 and FIG. 9, this vibration isolating member 108 of the deaerator 1B is formed in a columnar shape such as a cylinder or a square column. An upper end, which is a tip on one side, of the vibration isolating member 108 is bonded to the bottom face 52b of the fixing plate 52, and a lower end, which is a tip on the other side, of the vibration isolating member 103 is bonded to the upper surface 2a of the bottom plate 2. Even with this configuration, the vibration isolating member 108 is interposed between the bottom plate 2 of the housing 5 and the fixing plate 52 of the discharge device 50 to support the discharge device 50 with respect to the bottom plate 2 of the housing 5. Thus, setting the resonance frequency of the vibration isolating member 108 to 45 Hz or lower can effectively suppress transmission of vibrations from the discharge device 50 to the other components. This can suppress, for example, breakage of the tube unit 12, disconnection of the tube unit 12, the occurrence of noise, the growth of microbubble in a test fluid, and the like.

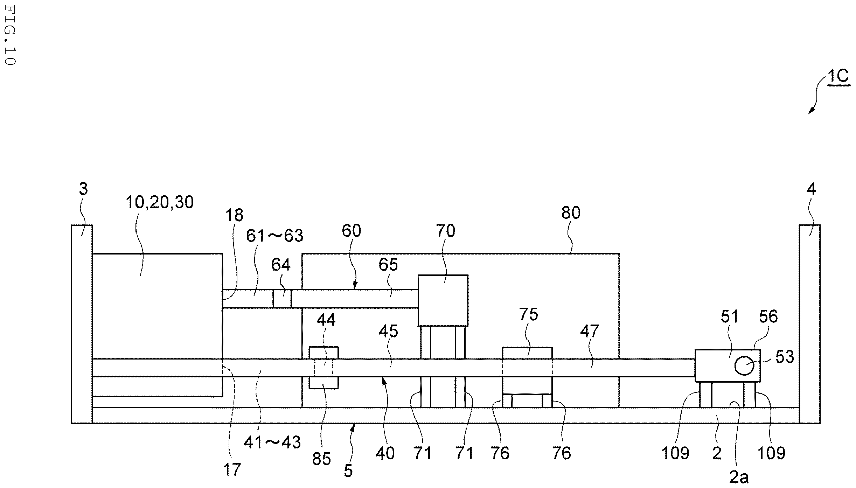

For example, the vibration isolating member is not necessarily mounted on the fixing plate of the discharge device and may be mounted on the pump of the discharge device. FIG. 10 is a schematic side view of a deaerator as another example. This deaerator 1C illustrated in FIG. 10 is basically the same as the deaerator 1 of the above embodiment, but the configuration of the discharge device, the shape of the vibration isolating member, and the mounting structure of the vibration isolating member to the housing and the discharge device differ from those of the deaerator 1 of the above embodiment. As illustrated in FIG. 10, this discharge device 56 of the deaerator 1C has the same pump 51 as that of the above embodiment but does not have any configuration corresponding to the fixing plate of the above embodiment. This vibration isolating member 109 of the deaerator 1C is mounted on the pump 51 and the bottom plate 2 directly or indirectly. The shape of the vibration isolating member 109 and the mounting structure of the vibration isolating member 109 to the pump 51 and the bottom plate 2 can be the same as, for example, the shape of the vibration isolating member 101 and the mounting structure of the vibration isolating member 101 to the fixing plate 52 and the bottom plate 2 illustrated in FIG. 5, the shape of the vibration isolating member 103 and the mounting structure of the vibration isolating member 103 to the fixing plate 52 and the bottom plate 2 illustrated in FIG. 7, the shape of the vibration isolating member 108 and the mounting structure of the vibration isolating member 108 to the fixing plate 52 and the bottom plate 2 illustrated in FIG. 9, or the like.

### [Examples]

The present invention will be described more specifically below based on test examples, but the present invention is not limited to the following test examples.

### (Example 1)

### [Vibration Test]

As Example 1, the deaerator 1 with the configuration illustrated in FIG. 1, FIG. 2, and FIG. 5 was used. In the deaerator 1 of Example 1, resin tubes of the material denoted as P1 below were used for the discharge piping sections 41, 42, and 43, the piping 45 and the detection piping section 46 of the vacuum piping 40, and the release piping sections 61, 62, and 63 and the piping 65 of the atmospheric release piping 60. Hard plastic (polypropylene) was used for the discharge assembly section 44 and the release assembly section 64. For the four vibration isolating members 101, a vibration isolation gel (αGEL available from Taica Corporation ("αGEL" is a registered trademark of Taica Corporation), A-1 (product name)) was used, which had a resonance point (peak top) of 42 Hz and a resonance magnification of 10 dD or less.

A vibration test was conducted using the deaerator 1 of Example 1. As an overview of the vibration test, a malfunction was checked when vibrations were applied to the deaerator 1 by a vibration generator. The vibration test conditions were linear sweep with a frequency of 50 to 60 Hz, an acceleration of 1 G, a vibration duration of 100 hours, and a temperature of 30°C or 60°C during vibrations. The criteria were as follows. The junction in the criteria means a point where the resin tube forming each of the discharge piping sections 41, 42, and 43, the piping 45, and the detection piping section 46 is joined to the discharge assembly section 44, or a point where the resin tube forming each of the release piping sections 61, 62, and 63 and the piping 65 is joined to the release assembly section 64.

### [Criteria]

### Criterion A No abnormality

Criterion B1 Tube loosened at a junction (at one or more locations)
Criterion B2 Tube disconnected at a junction (at one or more locations)
Criterion B3 Tube loosened and disconnected at a junction (at one or more locations each)
Criterion C Junction damaged (unusable)

P1: Styrene thermoplastic elastomer tube (single-wall tube with an outer diameter of 6 mm, an inner diameter of 4 mm, an oxygen permeability coefficient of 200 cc(STP)cm/cm²/sec/cmHg×10⁻¹⁰, and a rubber hardness of 65 degrees)

The P1 tubes were produced by the following production method.
(Production Example) 30 parts by mass of polypropylene (random copolymer "13T25A" from Flint Hills Resources) and a styrene thermoplastic elastomer (styrene/ethylene/butylene/styrene (SEBS) block copolymer "FG1924 G Polymer" from KRATON CORPORATION) were melted and kneaded in a twin-screw vent extruder with an inner diameter of 30 mm (set temperature 200°C) and then pelletized. Using a single-wall tube fabrication machine with a plasticizing cylinder (an inner diameter of 20 mm, uniaxial extrusion screw) and a die for tubing, a single-wall tube with an outer diameter of 6 mm and an inner diameter of 4 mm was fabricated by feeding the pellets into the plasticizing cylinder, extruding a tube at a temperature of 200°C, and adjusting the winding speed.

As a result of the vibration test described above, it was confirmed that the criterion was A in the deaerator 1 of Example 1.

### (Comparison Example 1)

A vibration test was conducted in the same manner as in Example 1 except that a vibration isolation gel with a resonance point (peak top) of 60 Hz and a resonance magnification of 20 dD was used for the four vibration isolating members 101.

As a result of the vibration test described above, it was confirmed that the criterion was B2 in the deaerator 1 of Comparative Example 1.

### (Comparison Example 2)

A vibration test was conducted in the same manner as in Example 1 except that the discharge device 50 was placed on the bottom plate 2 without using the four vibration isolating members 101.

As a result of the vibration test described above, it was confirmed that the criterion was C in the deaerator 1 of Comparative Example 1.

### Industrial Applicability

The present invention can be used as a deaerator for use in liquid chromatography, gas chromatography, biochemical analyzers, inkjet filling apparatuses, and the like.

### Reference Signs List

1, 1A, 1B, 1C deaerator
2 bottom plate
2a upper face
2c screw hole
2d through hole
3 front plate
4 rear plate
5 housing
10, 20, 30 deaerating module
11 tube
12 tube unit
12a inlet port
12b discharge port
13 housing
13a opening
14 lid
15 connector portion
16 connector portion
17 discharge port
18 release port
40 vacuum piping
41, 42, 43 discharge piping section
44 discharge assembly section
45 piping
46 detection piping section
47 discharge piping
50 discharge device
51 pump
52 fixing plate
52a upper face
52b lower face
52c through hole
52d through hole
53 motor
54 intake port
55 exhaust port
56 discharge device
60 atmospheric release piping
61, 62, 63 release piping section
64 release assembly section
65 piping
66 end
70 atmospheric release valve
71 leg
75 regulating valve
76 leg
80 control unit
85 detector
101 vibration isolating member
101a neck portion
101b upper diameter-expanded portion
101c lower diameter-expanded portion
101d through hole
102 screw
103 vibration isolating member
104 upper plate
104a screw groove
105 lower plate
105a screw groove
106 screw
107 screw
108 vibration isolating member
109 vibration isolating member
S1 fluid circulation space
S2 reduced-pressure space

## Claims

1. A deaerator comprising:
a deaerating module having a tube unit having gas permeability, sectioning between a fluid circulation space and a reduced-pressure space;
a discharge device communicatively connected to vacuum piping communicatively connected to the reduced-pressure space of the deaerating module and configured to discharge a gas in the reduced-pressure space to the outside via the vacuum piping;
a housing installed with the deaerating module and the discharge device; and
a vibration isolating member interposed between the housing and the discharge device to support the discharge device with respect to the housing,
the vibration isolating member having a resonance frequency of 45 Hz or lower.

2. The deaerator according to claim 1, wherein
the housing has a bottom plate defining a bottom plate of the deaerator, and
the discharge device is supported with respect to the bottom plate via the vibration isolating member.

3. The deaerator according to claim 2, wherein
the housing has a front plate erected on the bottom plate, and
the deaerating module is fixed to the front plate.

4. The deaerator according to claim 2 or 3, wherein
at least part of the vibration isolating member is arranged between the bottom plate and the discharge device, and
the discharge device is arranged so as to have a predetermined height from the bottom plate.

5. The deaerator according to any one of claims 2 to 4, wherein
the discharge device has a pump and a fixing plate to which the pump is fixed, and
the vibration isolating member is interposed between the bottom plate and the fixing plate.

6. The deaerator according to any one of claims 1 to 5, wherein at least part of the vacuum piping is a resin composition containing polyolefin and a styrene thermoplastic elastomer.
